# EUROPEAN PATENT APPLICATION

(11) **EP 3 592 008 A1**
(43) Date of publication of application: **08.01.2020**
(21) Application number: 19765633.3
(22) Date of filing: 25.03.2019
(51) Int. Cl.: H04W 4/50, H04W 8/02, H04W 60/00

(54) **METHOD AND DEVICE FOR USING LADN IN WIRELESS COMMUNICATION SYSTEM**

(30) Priority: 11.05.2018 KR 20180054208
(71) Applicant: LG ELECTRONICS INC., Yeongdeungpo-Gu Seoul 07336 (KR)
(72) Inventor: KIM, Hyunsook, Seocho-Gu Seoul 06772 (KR); KIM, Laeyoung, Seocho-Gu Seoul 06772 (KR); RYU, Jinsook, Seocho-Gu Seoul 06772 (KR); YOUN, Myungjune, Seocho-Gu Seoul 06772 (KR)
(74) Representative: Plasseraud IP
(86) International application number: PCT/KR2019/003447
(87) International publication number: WO 2019/216546

(57) **Abstract**

It is disclosed a method for utilizing LADN in a wireless communication system and an apparatus for the same. Particularly, the method of establishing a protocol data unit (PDU) session for a local area data network (LADN) service by a user equipment (UE) in a wireless communication system may include transmitting to an Access and mobility Management Function (AMF), a registration request including information for informing a request of LADN information for the LADN service; receiving, from the AMF, a registration accept for informing that the registration request is accepted, the registration accept including the LADN information; and establishing a PDU session for the LADN service by performing a PDU session establishment procedure.

## Description

### [Technical Field]

The present invention relates to a wireless communication system and, more particularly, to a method for a User Equipment (UE) to utilize Local Area Data Network (LADN) and an apparatus for supporting the same.

### [Background Art]

Mobile communication systems have been developed to provide voice services, while guaranteeing user activity. Service coverage of mobile communication systems, however, has extended even to data services, as well as voice services, and currently, an explosive increase in traffic has resulted in shortage of resource and user demand for high speed services, requiring advanced mobile communication systems.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive Multiple Input Multiple Output (MIMO), in-band full duplex, non-orthogonal multiple access (NOMA), supporting super-wide band, and device networking, have been researched.

### [Disclosure]

### [Technical Problem]

An object of the present invention proposes a method for a UE to utilize LADN efficiently.

Furthermore, an object of the present invention proposes a method for providing LADN information which is optimized for an LADN service.

Furthermore, an object of the present invention proposes a method for discovering LADN for a non-subscription model.

Technical objects to be achieved in the present invention are not limited to the aforementioned technical objects, and other technical objects not described above may be evidently understood by a person having ordinary skill in the art to which the present invention pertains from the following description.

### [Technical Solution]

According to an aspect of the present invention, a method of establishing a protocol data unit (PDU) session for a local area data network (LADN) service by a user equipment (UE) in a wireless communication system may include transmitting to an Access and mobility Management Function (AMF), a registration request including information for informing a request of LADN information for the LADN service; receiving, from the AMF, a registration accept for informing that the registration request is accepted, the registration accept including the LADN information; and establishing a PDU session for the LADN service by performing a PDU session establishment procedure.

According to another aspect of the present invention, a user equipment (UE) configured to establish a protocol data unit (PDU) session for a local area data network (LADN) service in a wireless communication system may include a transceiver; and a processor for controlling the transceiver, wherein the processor may be configured to perform: transmitting to an Access and mobility Management Function (AMF), a registration request including information for informing a request of LADN information for the LADN service; receiving, from the AMF, a registration accept for informing that the registration request is accepted, the registration accept including the LADN information; and establishing a PDU session for the LADN service by performing a PDU session establishment procedure.

Preferably, the registration request may further include a separator for separating the request of only the LADN information that supports a service in the AMF or the request of the LADN information which is commonly applied to Public Land Mobile Network (PLMN) and/or version information of the LADN information which was received previously.

Preferably, based on the separator, the registration accept may include only the LADN information that supports a service in the AMF or the LADN information which is commonly applied to the PLMN.

Preferably, based on the version information of the LADN information, the registration accept may include only the LADN information of which version is updated in comparison with the version information of the LADN information.

Preferably, a policy for the LADN discovery is setup, and when the UE decides a discovery of the LADN information based on the policy for the LADN discovery, the registration request may be transmitted to the AMF.

Preferably, when a validity condition included in the policy for the LADN discovery is satisfied or the UE identifies that the UE enters the LDAN service area, the UE may decide a discovery of the LADN information.

Preferably, the policy for an LADN discovery may be independently decided for each UE.

Preferably, the policy for an LADN discovery may be preconfigured to the UE.

Preferably, the policy for an LADN discovery may be received from the AMF.

### [Advantageous Effects]

According to the embodiment of the present invention, a UE may utilize LADN efficiently.

In addition, according to the embodiment of the present invention, it may be prevented a reception of unnecessary LADN information whenever a UE resisters/update of LADN information is occurred.

In addition, LADN discovery policy is generated (determined) for each UE, more flexible LADN service may be provided for each UE.

Technical effects which may be obtained in the present invention are not limited to the technical effects described above, and other technical effects not mentioned herein may be understood to those skilled in the art from the description below.

### [Description of Drawings]

The accompanying drawings, which are included herein as a part of the description for help understanding the present invention, provide embodiments of the present invention, and describe the technical features of the present invention with the description below.
FIG. 1 illustrates a wireless communication system architecture to which the present invention is applicable.
FIG. 2 is a diagram illustrating a wireless protocol stack in a wireless communication system to which the present invention is applicable.
FIG. 3 is a diagram for describing a method for providing LADN information and an LADN service area in a wireless communication system to which the present invention is applicable.
FIG. 4 is a diagram illustrating a UE mobility event notification and a location report procedure of an NG-RAN in a wireless communication system to which the present invention is applicable.
FIG. 5 is a diagram for describing a report of UE presence in LADN service area in a wireless communication system to which the present invention is applicable.
FIG. 6 is a diagram illustrating an LADN information forwarding method according to an embodiment of the present invention.
FIG. 7 is a diagram illustrating a policy forwarding method for LADN discovery according to an embodiment of the present invention.
FIG. 8 is a diagram for a method for utilizing LADN according to an embodiment of the present invention.
FIG. 9 illustrates a block diagram of a User Equipment according to an embodiment of the present invention.
FIG. 10 illustrates a block diagram of a User Equipment according to an embodiment of the present invention.
FIG. 11 illustrates a method for utilizing LADN according to an embodiment of the present invention.
FIG. 12 illustrates a block diagram of a network node according to an embodiment of the present invention.
FIG. 13 illustrates a block diagram of a network node according to an embodiment of the present invention.

### [Mode for Invention]

In what follows, preferred embodiments according to the present invention will be described in detail with reference to appended drawings. The detailed descriptions provided below together with appended drawings are intended only to explain illustrative embodiments of the present invention, which should not be regarded as the sole embodiments of the present invention. The detailed descriptions below include specific information to provide complete understanding of the present invention. However, those skilled in the art will be able to comprehend that the present invention can be embodied without the specific information.

For some cases, to avoid obscuring the technical principles of the present invention, structures and devices well-known to the public can be omitted or can be illustrated in the form of block diagrams utilizing fundamental functions of the structures and the devices.

A base station in this document is regarded as a terminal node of a network, which performs communication directly with a UE. In this document, particular operations regarded to be performed by the base station may be performed by an upper node of the base station depending on situations. In other words, it is apparent that in a network consisting of a plurality of network nodes including a base station, various operations performed for communication with a UE can be performed by the base station or by network nodes other than the base station. The term Base Station (BS) can be replaced with a fixed station, Node B, evolved-NodeB (eNB), Base Transceiver System (BTS), or Access Point (AP). Also, a terminal can be fixed or mobile; and the term can be replaced with User Equipment (UE), Mobile Station (MS), User Terminal (UT), Mobile Subscriber Station (MSS), Subscriber Station (SS), Advanced Mobile Station (AMS), Wireless Terminal (WT), Machine-Type Communication (MTC) device, Machine-to-Machine (M2M) device, or Device-to-Device (D2D) device.

In what follows, downlink (DL) refers to communication from a base station to a terminal, while uplink (UL) refers to communication from a terminal to a base station. In downlink transmission, a transmitter can be part of the base station, and a receiver can be part of the terminal. Similarly, in uplink transmission, a transmitter can be part of the terminal, and a receiver can be part of the base station.

Specific terms used in the following descriptions are introduced to help understanding the present invention, and the specific terms can be used in different ways as long as it does not leave the technical scope of the present invention.

Embodiments of the present invention can be supported by standard documents disclosed in at least one of wireless access systems including the IEEE 802, 3GPP, and 3GPP2 specifications. In other words, among the embodiments of the present invention, those steps or parts omitted for the purpose of clearly describing technical principles of the present invention can be supported by the documents above. Also, all of the terms disclosed in this document can be explained with reference to the standard documents.

To clarify the descriptions, this document is based on the 3GPP 5G (5 Generation) system, but the technical features of the present invention are not limited to the current descriptions.

Terms used in this document are defined as follows.
- Evolved Packet System (EPS): a network system including an Evolved Packet Core (EPC), that is an Internet Protocol (IP) based packet switched core network, and an access network such as LTE and UTRAN. The EPS is a network of an evolved version of a Universal Mobile Telecommunications System (UMTS).
- eNodeB: a base station of an EPS network. The eNodeB is installed outdoor, and its coverage has a scale of a macro cell.
- International Mobile Subscriber Identity (IMSI): an internationally unique subscriber identity allocated in a mobile communication network.
- Public Land Mobile Network (PLMN): a network configured for the purpose of providing mobile communication services to individuals. The PLMN can be configured for each operator.
- 5G system (5GS): a system composed of a 5G Access Network (AN), a 5G core network and a User Equipment (UE).
- 5G Access Network (5G-AN) (or AN): an access network composed of a New Generation Radio Access Network (NG-RAN) and/or a non-3GPP Access Network (AN) connected to the 5G core network.
- New Generation Radio Access Network (NG-RAN) (or RAN): a Radio Access Network having a common feature of being connected to 5GC and supporting one or more of the following options:
   1) Standalone New Radio.
   2) New radio that is an anchor supporting E-UTRA extension.
   3) Standalone E-UTRA (for example, eNodeB).
   4) Anchor supporting new radio extension
- 5G Core Network (5GC): a core network connected to a 5G access network.
- Network Function (NF): means a processing function adopted in 3GPP within a network or defined in 3GPP. The processing function includes a defined functional behavior and an interface defined in 3GPP.
- NF service: a function exposed by the NF via a service-based interface and consumed by other authenticated NF(s).
- Network Slice: a logical network that provides specific network capability(s) and network feature(s).
- Network Slice instance: a set of NF instance(s) and required resources(s) (e.g., compute, storage, and networking resources) that form a deployed network slice.
- Protocol Data Unit (PDU) Connectivity Service: service providing the exchange of PDU(s) between the UE and a data network.
- PDU Connectivity Service: service providing the exchange of PDU(s) between the UE and a data network.
- PDU Session: association between the UE and the data network providing the PDU Connectivity Service. An association type may be Internet Protocol (IP), Ethernet, or unstructured.
- Non-Access Stratum (NAS): a functional layer for transceiving signaling and a traffic message between the UE and the core network in EPS and 5GS protocol stack. The NAS mainly functions to support mobility of the UE and support a session management procedure.

### 5G system architecture to which the present invention is applicable

A 5G system is an advanced technology from 4G LTE mobile communication technology and supports a new Radio Access Technology (RAT), extended Long Term Evolution (eLTE) as an extended technology of LTE, non-3GPP access (e.g., Wireless Local Area Network (WLAN) access), etc. through the evolution of an existing mobile communication network structure or a Clean-state structure.

5G system architecture is defined to support data connection and service such that deployment can use technologies such as network function virtualization and software defined networking. The 5G system architecture utilizes service-based interaction between control plane (CP) and network function (NF).

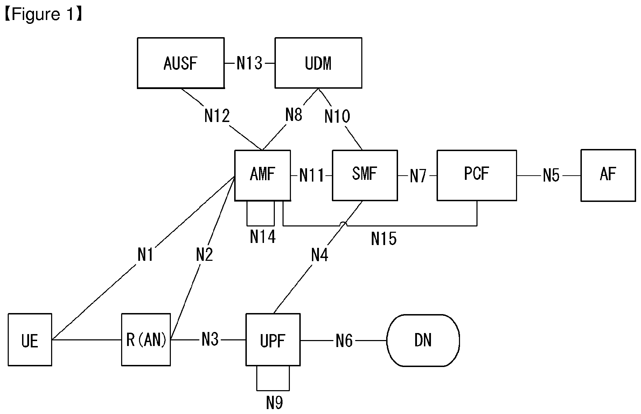

FIG. 1 illustrates a wireless communication system architecture to which the present invention is applicable.

The 5G system architecture may include various components (i.e., network functions (NFs)), and FIG. 1 shows some of the components.

Access and Mobility Management Function (AMF) supports functions such as signaling between CN nodes for mobility between 3GPP access networks, termination of a radio access network (RAN) CP interface (N2), termination of NAS signaling (N1), registration management (registration area management), idle mode UE reachability, network slicing support, SMF selection, and the like.

Some or all functions of the AMF may be supported in a single instance of one AMF.

Data network (DN) refers to an operator service, Internet access or third party service and the like, for example. The DN transmits a downlink protocol data unit (PDU) to the UPF or receives, from the UPF, a PDU transmitted from the UE.

Policy Control function (PCF) receives information about packet flow from an application server and provides a function of determining policies such as mobility management and session management.

Session Management Function (SMF) provides a session management function and may be managed by different SMFs per session when the UE has a plurality of sessions.

Some or all functions of the SMF may be supported in a single instance of one SMF.

Unified Data Management (UDM) stores user subscription data, policy data and the like.

User plane Function (UPF) forwards a downlink PDU received from the DN to the UE via a (R)AN and forwards an uplink PDU received from the UE to the DN via the (R)AN.

Application Function (AF) interacts with a 3GPP core network for service provision (e.g., supporting functions such as application influence on traffic routing, network capability exposure access, and interaction with policy framework for policy control).

(Radio) Access Network ((R)AN) is a generic term for new radio access networks supporting both of evolved E-UTRA (E-UTRA) which is an evolved version of 4G radio access technology and New Radio (NR) access technology (e.g., gNB).

The gNB supports functions such as functions for radio resource management (i.e., radio bearer control, radio admission control, connection mobility control, dynamic allocation of resources to UE on uplink/downlink (i.e., scheduling), and the like.

The User Equipment (UE) refers to a user device.

In the 3GPP system, a conceptual link connecting NFs in a 5G system is defined as a reference point.

N1 (or NG1) means a reference point between the UE and the AMF, N2 (or NG2) means a reference point between the (R)AN and the AMF, N3 (or NG3 means a reference point between the (R)AN and the UPF, N4 (NG4) means a reference point between the SMF and the UPF, N5 (NG5) means a reference point between the PCF and the AF, N6 (or NG6) means a reference point between the UPF and a data network, N7 (NG7) means a reference point between the SMF and the PCF, N24 (NG24) means a reference point between the PCF in a visited network and the PCF in a home network, N8 (NG8) means a reference point between the UDM and the AMF, N9 (NG9) means a reference point between two core UPFs, N10 (NG10) means a reference point between the UDM and the SMF, N11 (NG11) means a reference point between the AMF and the SMF, N12 (NG12) means a reference point between the AMF and the AUSF, N13 (NG13) means a reference point between the UDM and the authentication server function (AUSF), N14 (NG14) means a reference point between two AMFs, and N15 (NG15) means a reference point between the PCF and the AMF in the case of a non-roaming scenario and reference point between the PCF and the AMF in a visited network in the case of a roaming scenario.

Meanwhile, although FIG. 1 illustrates a reference model for cases in which a UE accesses a single DN using a single PDU session for the convenience of description, the present invention is not limited thereto.

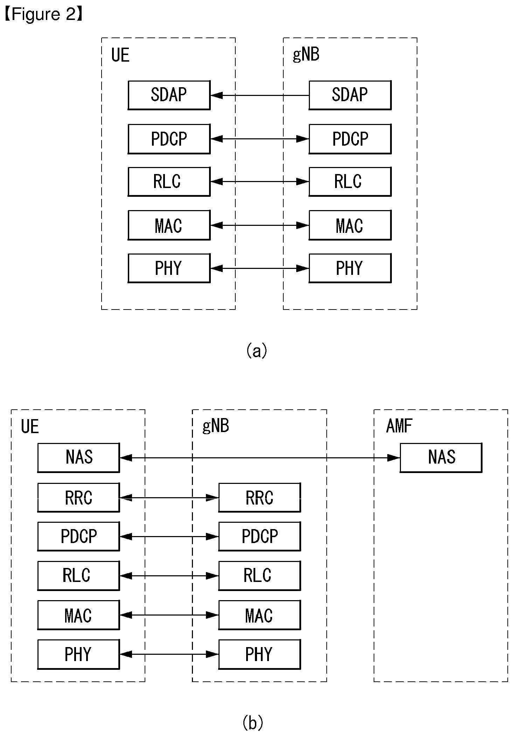

FIG. 2 is a diagram illustrating a wireless protocol stack in a wireless communication system to which the present invention is applicable.

FIG. 2(a) illustrates a radio interface user plane protocol stack between a UE and gNB, and FIG. 2(b) illustrates a radio interface control plane protocol stack between the UE and the gNB.

The control plane means a path through which control messages used for a UE and a network to manage calls are transmitted. The user plane means a path through which data generated in an application layer, for example, voice data, Internet packet data, and so on are transmitted.

Referring to FIG. 2(a), the user plane protocol stack may be divided into Layer 1 (i.e., physical (PHY) layer) and Layer 2.

Referring to FIG. 2(b), the control plane protocol stack may be divided into Layer 1 (i.e., PHY layer), Layer 2, Layer 3 (i.e., radio resource control (RRC) layer), and a Non-Access Stratum (NAS) layer.

The Layer 2 is divided into a Medium Access Control (MAC) sublayer, a Radio Link Control (RLC) sublayer, a Packet Data Convergence Protocol (PDC) sublayer, and a Service Data Adaptation Protocol (SDAP) sublayer (in case of the user plane).

A radio bearer is classified into two groups: data radio bearer (DRB) for user plane data and signaling radio bearer (SRB) for control plane data.

Each layer of the control plane and the user plane of the radio protocol is described below.
1) The Layer 1, i.e., the PHY layer, provides information transfer service to an upper layer by using a physical channel. The PHY layer is connected to the MAC sublayer located at an upper level through a transport channel, and data are transmitted between the MAC sublayer and the PHY layer through the transport channel. The transport channel is classified according to how and which feature data is transmitted via a radio interface. And, data is transmitted between different PHY layers, between a PHY layer of a transmitter and a PHY layer of a receiver, through a physical channel.
2) The MAC sublayer performs mapping between a logical channel and a transport channel; multiplexing/demultiplexing of MAC Service Data Unit (SDU) belonging to one or different logical channel(s) to/from a transport block (TB) delivered to/from the PHY layer through a transport channel; scheduling information reporting; error correction through hybrid automatic repeat request (HARQ); priority handling between UEs using dynamic scheduling; priority handling between logical channels of one UE using logical channel priority; and padding.
   Different kinds of data deliver a service provided by the MAC sublayer. Each logical channel type defines what type of information is delivered.
   The logical channel is classified into two groups: a Control Channel and a Traffic Channel.
   i) The Control Channel is used to deliver only control plane information and is as follows.
      - Broadcast Control Channel (BCCH): a downlink channel for broadcasting system control information.
      - Paging Control Channel (PCCH): a downlink channel that delivers paging information and system information change notification.
         - Common Control Channel (CCCH): a channel for transmitting control information between a UE and a network. This channel is used for UEs having no RRC connection with the network.
         - Dedicated Control Channel (DCCH): a point-to-point bi-directional channel for transmitting dedicated control information between the UE and the network. This channel is used by the UE having an RRC connection.
   ii) The Traffic Channel is used to use only user plane information.
      - Dedicated Traffic Channel (DTCH): a point-to-point channel, dedicated to a single UE, for delivering user information. The DTCH may exist in both uplink and downlink.

   In the downlink, connection between the logical channel and the transport channel is as follows.
   The BCCH may be mapped to BCH. The BCCH may be mapped to DL-SCH. The PCCH may be mapped to PCH. The CCCH may be mapped to the DL-SCH. The DCCH may be mapped to the DL-SCH. The DTCH may be mapped to the DL-SCH.
   In the uplink, connection between the logical channel and the transport channel is as follows. The CCCH may be mapped to UL-SCH. The DCCH may be mapped to the UL-SCH. The DTCH may be mapped to the UL-SCH.
3) The RLC sublayer supports three transmission modes: a Transparent Mode (TM), an Unacknowledged Mode (UM), and an Acknowledged Mode (AM).
   The RLC configuration may be applied for each logical channel. In case of SRB, the TM or the AM is used. On the other hand, in case of DRB, the UM the AM is used.
   The RLC sublayer performs the delivery of the upper layer PDU; sequence numbering independent of PDCP; error correction through automatic repeat request (ARQ); segmentation and re-segmentation; reassembly of SDU; RLC SDU discard; and RLC re-establishment.
4) A PDCP sublayer for the user plane performs Sequence Numbering; header compression and decompression (Robust Header Compression (RoHC) only); delivery of user data; reordering and duplicate detection (if the delivery to a layer above the PDCP is required); PDCP PDU routing (in case of a split bearer); re-transmission of PDCP SDU; ciphering and deciphering; PDCP SDU discard; PDCP re-establishment and data recovery for RLC AM; and duplication of PDCP PDU.
   The PDCP sublayer for the control plane additionally performs Sequence Numbering; ciphering, deciphering and integrity protection; delivery of control plane data; duplicate detection; and duplication of PDCP PDU.
   When duplication is configured for a radio bearer by RRC, an additional RLC entity and an additional logical channel are added to the radio bearer to control the duplicated PDCP PDU(s). The duplication at PDCP includes transmitting the same PDCP PDUs twice. Once it is transmitted to the original RLC entity, and a second time it is transmitted to the additional RLC entity. In this instance, the original PDCP PDU and the corresponding duplicate are not transmitted to the same transport block. Two different logical channels may belong to the same MAC entity (in case of CA) or different MAC entities (in case of DC). In the former case, logical channel mapping restriction is used to ensure that the original PDCP PDU and the corresponding duplicate are not transmitted to the same transport block.
5) The SDAP sublayer performs i) mapping between QoS flow and data radio bearer, and ii) QoS flow identification (ID) marking in downlink and uplink packet.
   A single protocol entity of SDAP is configured for each individual PDU session, but exceptionally, in case of dual Connectivity (DC), two SDAP entities can be configured.
6) A RRC sublayer performs broadcast of system information related to Access Stratum (AS) and Non-Access Stratum (NAS); paging initiated by 5GC or NG-RAN; establishment, maintenance and release of RRC connection between UE and NG-RAN (additionally including modification and release of carrier aggregation and also additionally including modification and release of Dual Connectivity between E-UTRAN and NR or in NR); security function including key management; establishment, configuration, maintenance and release of SRB(s) and DRB(s); delivery of handover and context; UE cell selection and re-release and control of cell selection/reselection: mobility function including inter-RAT mobility; QoS management function, UE measurement reporting and control of reporting; detection of radio link failure and recovery from radio link failure; and NAS message delivery from NAS to UE and NAS message delivery from UE to NAS.

### Local Area Data Network (LADN)

The access to a DN via a PDU Session for a LADN is only available in a specific LADN service area. A LADN service area is a set of Tracking Areas. LADN is a service provided by the serving PLMN of the UE:
- LADN service applies only to 3GPP accesses and does not apply in Home Routed case.
- The usage of LADN DNN requires an explicit subscription to this DNN or subscription to a wildcard DNN.
- Whether a DNN corresponds to a LADN service is an attribute of a DNN.
- The UE is configured to know whether a DNN is a LADN DNN.

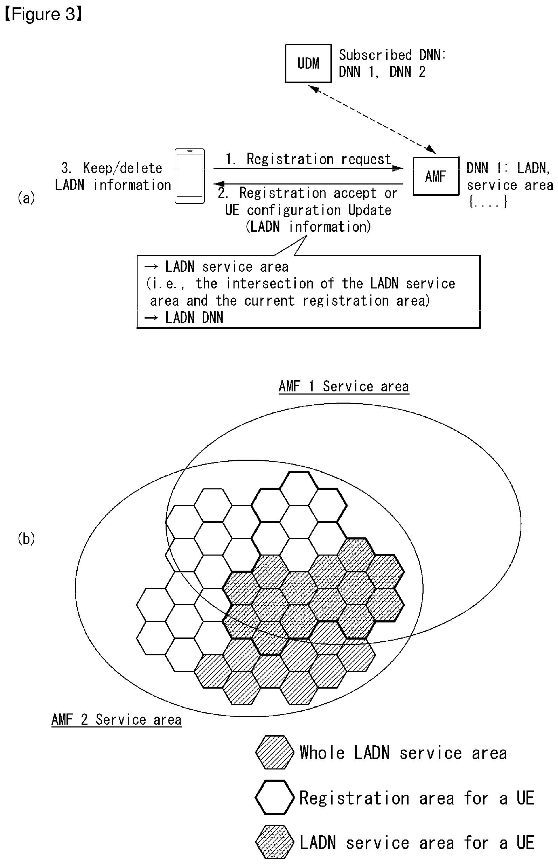

FIG. 3 is a diagram for describing a method for providing LADN information and an LADN service area in a wireless communication system to which the present invention is applicable.

Referring to FIG. 3, LADN Information (i.e. LADN service area information and LADN DNN) is configured in the AMF on a per DN basis (as shown in FIG. 3, DNN1: LADN, service area). That is, for different UEs accessing the same LADN, the configured LADN service area is the same regardless of other factors (e.g. UE's registration area or UE subscription information).

LADN Information is provided by AMF to the UE during the Registration procedure or UE Configuration Update procedure (first step in FIG. 3(a)).

For each LADN DNN configured in the AMF, the corresponding LADN service area information includes a set of Tracking Areas that belong to the current Registration Area of the UE (i.e. the intersection of the LADN service area and the current Registration Area).

When the UE performs a successful (Re)registration procedure, the AMF may provide to the UE, based on local configuration about LADN, on UE location and on UE subscription information received from the UDM about subscribed DNN, the LADN Information for the LADNs available to the UE in that Registration Area in the Registration Accept message (second step in FIG. 3(a)).

During the subsequent Registration Update procedure, if the network does not provide LADN Information for a DNN, the UE deletes the LADN Information for such DNN (third step in FIG. 3(a)).

When the LADN Information for the UE in the 5GC is changed, the AMF updates LADN Information to the UE through UE Configuration Update/Registration procedure (second step in FIG. 3(a)).

Based on the LADN Information in the UE, the UE operates as follows:
a) When the UE is out of a LADN service area, the UE:
   - does not request to activate UP connection of a PDU Session for this LADN DNN;
   - does not establish/modify a PDU Session for this LADN DNN;
   - does not release any existing PDU Session for this LADN DNN unless UE receives explicit SM PDU Session Release Request message from the network.
b) When the UE is in a LADN service area, the UE:
   - may request a PDU Session Establishment/Modification for this LADN DNN;
   - may request to activate UP connection of the existing PDU Session for this LADN DNN.

The SMF supporting a DNN is configured with information about whether this DNN is a LADN DNN or not; The SMF subscribes to "UE mobility event notification" for reporting UE presence in Area of Interest (e.g., LADN service area) by providing LADN DNN to the AMF.

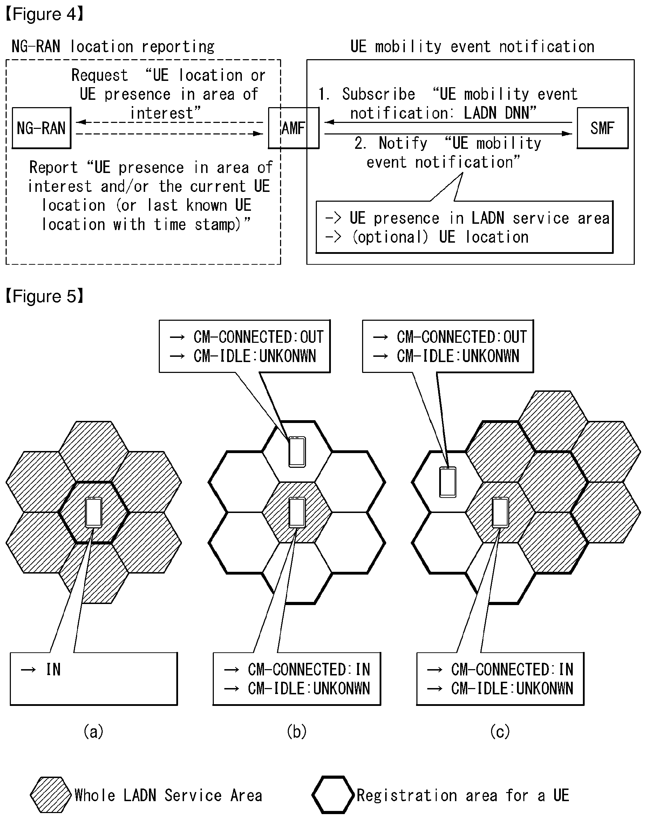

FIG. 4 is a diagram illustrating a UE mobility event notification and a location report procedure of an NG-RAN in a wireless communication system to which the present invention is applicable.

5G System supports the functionality of tracking and reporting UE mobility events.

The AMF provides the UE mobility related event reporting to NF that has been authorized to subscribe to the UE mobility event reporting service.

An NF service consumer such as SMF, PCF or Network Exposure Function (NEF) that wants to be reported on the UE location is able to subscribe to the UE mobility event notification service (e.g., 'Namf_EventExposure_Notify')to the AMF with the following parameters (first step of FIG. 4):
- Event reporting type that specifies what to be reported on UE mobility (e.g. UE location, UE mobility on Area of Interest).
- Area of interest that specifies a geographical area within 3GPP system. The area of interest is represented by a list of Tracking Areas, list of cells or list of (R)AN node identifiers. In the case of LADN, the event consumer (e.g. SMF) provides the LADN DNN to refer the LADN service area as the area of Interest.
- Event Reporting Information: event reporting mode, number of reports or maximum duration of reporting.
- Notification address (i.e. Endpoint Address of NF service consumer to be notified to).
- The target of event reporting that indicates a specific UE, a group of UE(s) or any UE

When an NF service consumer subscribes to the UE mobility event notification service provided by AMF for reporting of UE presence in area of Interest, the AMF tracks UE's location considering UE's Connection Management (CM) state and using NG-RAN location reporting (if RRC Inactive state applies to NG-RAN) in order to determine the UE presence in the area of Interest.

For tracking UE's location, the AMF may request a UE location or a report for a UE presence in the area of Interest. Further, the AMF may be reported with a UE presence in the area of interest and/or a current UE location (or a time stamp and a UE location which is lastly known). These procedures are not necessarily performed.

Upon detecting the change of the UE presence in the area of interest, the AMF notifies the UE presence in the area of Interest and the new UE location to the subscribed NF consumer (selectively) (second step of FIG. 4).

When the AMF is changed, the subscription of mobility event is transferred from the old AMF. The new AMF may decide not to notify the SMF with the current status related to the subscription of mobility event if the new AMF determines that, based on Mobility Management (MM) Context of the UE, the event is reported by the old AMF.

In the network deployment where a UE may leave or enter the area of interest without any notification to the 5GC in CM-CONNECTED state (i.e. in the case that RRC Inactive state applies to the NG-RAN), the AMF may initiate the NG-RAN location reporting to track the UE presence in the area of interest.

FIG. 5 is a diagram for describing a report of UE presence in LADN service area in a wireless communication system to which the present invention is applicable.

The AMF decides a UE presence (i.e., IN, OUT and UNKNOWN) in the area of interest (i.e., LADN service area) as below.
1) IN:
   - When the UE is located in the area of interest, and the UE is in CM-CONNECTED state, the AMF decides that the UE is present in the area of interest (IN) (refer to FIG. 5(c)).
   - Alternatively, when the UE is located in a registered area included in the area of interest, the AMF decides that the UE is present in the area of interest (IN) (refer to FIG. 5(a)).
2) OUT:
   - When the UE is out of the area of interest but located in a registered area in which the area of interest is usable and the UE is in CM-CONNECTED state, the AMF decides that the UE is out of the area of interest (OUT) (refer to FIG. 5(b)).
   - Alternatively, when the UE is located in a registered area in which the area of interest is not usable, the AMF decides that the UE is out of the area of interest (OUT) (refer to FIG. 5(c)).
3) UNKNOWN
   - When the UE is located in a registered area in which the area of interest is unusable and the area of interest does not include the entire registration area, and the UE is in CM-IDLE state, the AMF decides that a presence of the UE is unknown (UNKNOWN) (refer to FIG. 5(b) and FIG. 5(c)).

As described above, the AMF decides the UE presence in the area of interest (e.g., LADN service area), and as described in the second step of FIG. 4 above, provides the UE presence to an NF (e.g., SMF) which is allowed to subscribe to a UE mobility event report service (e.g., Namf_EventExposure_Notify).

Based on the notification about the UE presence in LADN service area notified by AMF (i.e. IN, OUT and UNKNOWN), the SMF operates as follows based on operator's policy:
a) When SMF is informed that the UE is out of an LADN service area ('OUT'), the SMF:
   - releases the PDU Session immediately; or
   - deactivates the user plane connection for the PDU Session with maintaining the PDU Session and ensures the Downlink Data Notification is disabled. The SMF may release the corresponding PDU Session later.
b) When SMF is informed that the UE is presence in an LADN service area ('IN'), the SMF:
   - ensures that Downlink Data Notification is enabled.
   - triggers the Network triggered Service Request procedure for a LADN PDU Session to active the UP connection when the SMF receives downlink data or Data Notification from UPF.
c) When the SMF is informed that the UE presence in a LADN service area is unknown ('UNKNOWN'), the SMF:
   - ensures that Downlink Data Notification is enabled.
   - triggers the Network triggered Service Request procedure for a LADN PDU Session to active the UP connection when the SMF receives downlink data or Data Notification from UPF.

### Method for utilizing LADN

According to the conventional art, a UE/user subscribed in an LADN service has a possibility of receiving too much LADN information from a network. That is, according to the conventional art, an optimization for LADN information forwarding is not considered.

Particularly, a UE is roaming to a visited network, in order for the UE to receive the LADN service used in the visited network, it is required to have the subscriber information in which use of wildcard DNN is allowed. At this time, the UE that has the subscriber information in which use of wildcard DNN is allowed has a problem of receiving all types of LADN information provided by the visited network whenever a registration is performed/update of LADN information is occurred.

In order to solve this problem, the present invention proposes an optimization method of LADN information forwarding.

The present invention may include a combination of one or more elements below, and in the following embodiment, an embodiment for representing each of the individual elements is shown, but it is available an embodiment in which one or more combination is constructed together.

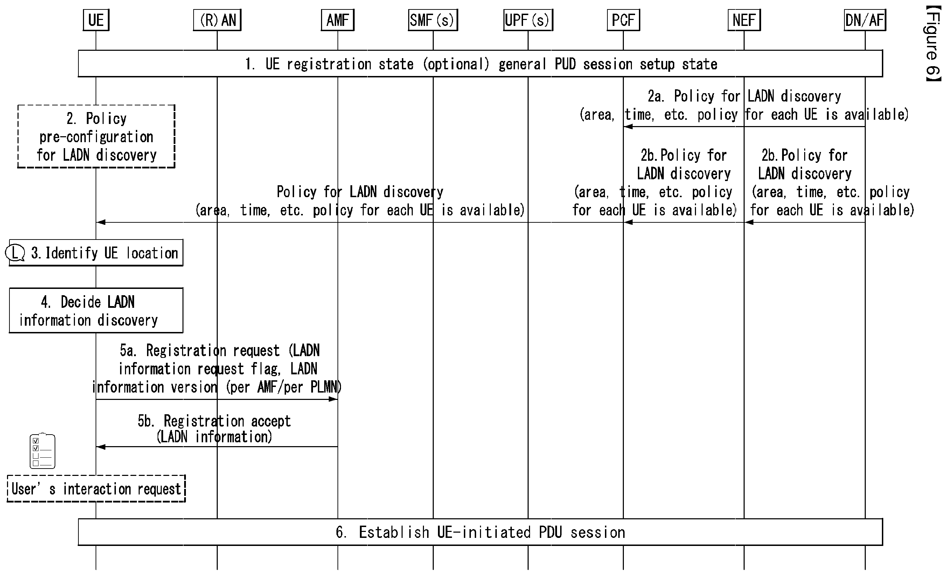

FIG. 6 is a diagram illustrating an LADN information forwarding method according to an embodiment of the present invention.
1. Through a registration process (e.g., attach procedure or registration procedure) in a network, a UE obtains LADN information (e.g., LADN DNN(s) and service area information for each LADN DNN) provided from a serving network node (e.g., AMF). At this time, selectively, the UE may configure (setup) a general PDU session (e.g., IMS(IP(Internet Protocol) Multimedia Subsystem) PDU session for a Voice service and/or Internet PDU session for an internet service), and accordingly, the UE may receive the corresponding service.
2. In order to implement the optimization method for LADN information forwarding, a policy for LADN discovery may be preconfigured to the UE.

Alternatively, the UE may receive a policy for LADN discovery (or policy for LADN discovery request; hereinafter, LADN discovery policy) through a PCF which is a node for configuring/controlling/managing a provider policy.

At this time, the PCF may generate LADN discovery policy or decide to provide it based on an input of an LADN DN/AF or an NEF, as described in step 2a or 2b.

The LADN discovery policy may be generated according to a specific granularity which is targeted to PLMN entire groups or managed by a provider. Alternatively, since the LADN discovery policy is forwarded to an individual UE by UE policy forwarding mechanism, it can be regarded as a sort of various UE policies, and accordingly, the LADN discovery policy may be generated by a granularity for each UE.

The LADN discovery policy is forwarded for the purpose that a UE starts to perform LADN discovery, basically. Accordingly, the LADN discovery policy may include a validity condition such that the corresponding LADN discovery policy is evaluated as a meaningful policy in a specific region/specific time/specific access network. In addition, more preferably, the LADN information, which was continuously provided by the conventional art in step 1, may not be forwarded to the UE, and the UE obtains the LADN information by trying LADN discovery on a specific timing by the LADN discovery policy, and accordingly, efficiency of LADN information provision may be increased.

Also, additionally, when the UE fails to obtain the LADN information, the LADN discovery policy may also include a policy for an operation that the UE may perform such as retrial of obtaining the LADN information.

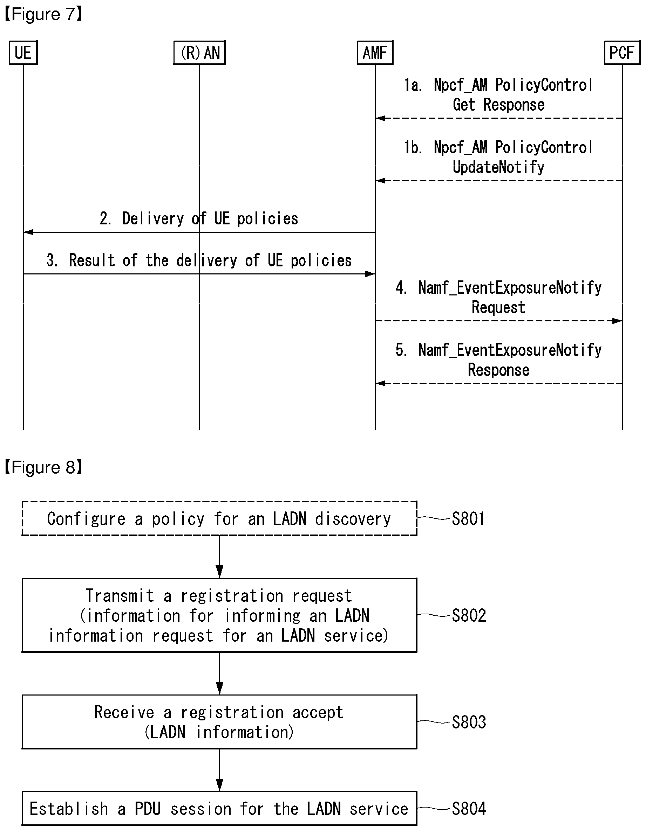

The method for a PCF to forward the LADN discovery policy to the UE in step 2 above is described in more detail with reference to FIG. 7 below.

FIG. 7 is a diagram illustrating a policy forwarding method for LADN discovery according to an embodiment of the present invention.

The policy forwarding method for the LADN discovery may be implemented by a UE Configuration Update procedure. The UE Configuration Update procedure is initiated when a PCF wants to update a UE access in a UE configuration and PDU session selection information (i.e., UE policy).
1a. AMF may receive a policy control acquisition response message (i.e., Npcf_AMPolicyControlGet Response) from the PCF. The Npcf_AMPolicyControlGet Response may include the Access and mobility related information or the UE Policy container (i.e., UE Access and PDU Session selection related information) or both of them. In addition, the Npcf_AMPolicyControlGet Response (particularly, the UE Policy container) may include the LADN discovery policy according to the present invention.
1b. Alternatively, AMF receives a policy control update notification (i.e., Npcf_AMPolicyControl UpdateNotify) from the PCF. The Npcf_AMPolicyControl UpdateNotify may include the Access and mobility related information or the UE Policy container (i.e., UE Access and PDU Session selection related information) or both of them. In addition, the Npcf_AMPolicyControlGet Response (particularly, the UE Policy container) may include the LADN discovery policy according to the present invention.
2. When a UE is in CM-IDLE state, the AMF triggers Network Triggered Service Request (refer to clause 4.2.3.3 of 3GPP TS 23.502 V15.1.0). In the case that the UE is not reachable, the AMF reports to the PCF that the UE Policy container could not be delivered to the UE.
   On the other hand, when the UE is in CM-CONNECTED state, the AMF transfers transparently the UE Policy container received from the PCF to the UE. The UE Policy container includes the list of Public Service Identities (PSIs) to notify the UE that one or more PSIs were added, removed or modified.
3. The UE performs the PSI operations and sends the result to the AMF. The AMF transfers transparently the result to the PCF. In the case that one or several PSI operations are failed, the UE includes the list of PSIs stored in the UE Policy container.
4. In the case that the AMF received the UE Policy container and the PCF is subscribed to be notified of the reception of the UE Policy container, the AMF forwards the response of the UE to the PCF using an event exposure message (i.e., Namf_EventExposure). At this time, the Namf_EventExposure includes the Event Information including an Event ID indicating "Policy container is received" and the UE Policy container.
5. The PCF confirms the reception of the Namf_EventExposure to the AMF.
   Referring to FIG. 6 again, in the case that in the step 3, the UE identifies its own location, and the UE satisfies the Validity condition of the LADN discovery policy (i.e., in the case that LADN information discovery is decided), the UE initiates the procedure for receiving the LADN information from the AMF (i.e., steps 5a to 5b).
   Alternatively, after the UE/user identifies that the UE enters a service area in which LADN is available or the UE enters a service area in which LADN is available on the time when the LADN service is provided, by an explicit user interaction (i.e., by deciding LADN information discovery), the UE/user may initiate the procedures for receiving the LADN information from the AMF (i.e., steps 5a to 5b).
5a. The UE sends a registration request to the AMF. In other words, the UE transmits an access network (AN) message including the registration request to the (R)AN. In addition, after the (R)AN selects the AMF, transmits N2 message including the registration request to the selected AMF.
   At this time, the UE may include information/indicator (or flag) for notifying explicit LADN information request to the registration request additionally.
   In this step, the UE may request only the LADN information that supports a service in the corresponding AMF (i.e., the AMF that receives the registration request in step 5a), or request the LADN information which is commonly applied to the entire PLMN. That is, the UE may transmit a separator for separating the request of only the LADN information that supports a service in the corresponding AMF or the request of the LADN information which is commonly applied to the PLMN with being included in the registration request.
   The level of requesting the information as such follows the policy/indication which may be selectively included in the LADN discovery policy.
   In addition, the UE may support the LADN, not the explicit information request such as information/indicator (or flag) for informing the LADN information request. Alternatively, in order to forward implicative information such as a user prefers to LADN utilization, the UE may induce a provision of the LADN information from a network.
   Furthermore, selectively, the UE may transmit version information (e.g., per UE and/or per AMF and/or per PLMN) of the LADN information which was received previously (e.g., received in a previous registration procedure or a UE configuration update procedure) with being included in the registration request to the AMF. By including such version information, a network (e.g., AMF) may help the UE to determine whether a LADN information provision in the corresponding timing is required or not.
5b. The UE receives a registration accept from the AMF. That is, the AMF transmits a registration accept message for indicating that the registration request is accepted to the UE. In other words, the AMF transmits N2 message including a registration accept to the (R)AN. In addition, the (R)AN transmits an AN message including a registration accept to the UE.
   At this time, the registration accept includes the LADN information. The LADN information may mean a list of one or more LADNs that the UE is able to utilize in a registration area. Each entry included in the LADN list may include LADN service area information and LADN DNN.
   In addition, in the case that the UE requests only the LADN information that supports a service in the corresponding AMF, the AMF may provide only the LADN information for an LADN service that the AMF itself supports to the UE. On the other hand, in the case that the UE requests the LADN information which is commonly applied in the PLMN, the AMF may provide the LADN information which is commonly applied in the PLMN to the UE.
   Furthermore, in the case that the UE includes version information (e.g., per UE and/or per AMF and/or per PLMN) of the LADN information which was received previously in the registration request, the AMF may extract the LADN information of which version is updated in comparison with the received version information, and provide it to the UE.
   The steps 5a to 5b described above may be implemented according to the registration procedure which is defined in 3GPP TS 23.502 V15.1.0 4.2.2.2 clause, and other steps not shown in FIG. 6 may also be performed according to the above registration procedure.
6. The UE configures/establishes a PDU session for the corresponding LADN service by performing UE-initiated PDU session establishment procedure.

Based on preconfigured LADN access permit information, the UE may start a procedure for requesting a PDU session setup (i.e., UE-initiated PDU session establishment procedure) without a user interaction.

Alternatively, according to configuration/policy of a provider, the UE may display a pop-up window for receiving an explicit input for an actual access/service start from a user. In addition, when the UE receives the input for an actual access/service start from a user, the UE performs UE-initiated PDU session establishment procedure, and accordingly, configures/establishes a PDU session for the corresponding LADN service. At this time, the UE may receive such an explicit input in an application level through a LADN related application from the user.

FIG. 8 is a diagram for a method for utilizing LADN according to an embodiment of the present invention.

Referring to FIG. 8, a UE may configure a policy for an LADN discovery (step, S801).

At this time, the policy for an LADN discovery may be preconfigured to the UE. Alternatively, the policy for an LADN discovery may be configured by receiving a policy for an LADN discovery generated by a PCF from an AMF.

In addition, the policy for an LADN discovery may be independently decided (generated) for each UE.

The UE transmits a registration request to the AMF (step, S802). The registration request includes information for informing an LADN information request for an LADN service.

Further, the registration request may further include a separator for separating the request of only the LADN information that supports a service in the AMF or the request of the LADN information which is commonly applied to Public Land Mobile Network (PLMN) and/or version information of the LADN information which was received previously.

In addition, in the case that a policy for the LADN discovery is setup as in step 801, when the UE decides a discovery of the LADN information based on the policy for the LADN discovery, the UE may transmit the registration request to the AMF. For example, when a validity condition included in the policy for the LADN discovery is satisfied or the UE identifies that the UE enters the LDAN service area (on the time when a LADN service is provided), the UE may decide a discovery of the LADN information.

The UE receives a registration accept for informing that the registration request is accepted (step, S803). The registration accept includes the LADN information.

At this time, in the case that a separator is included the registration request, based on the separator, the registration accept may include only the LADN information that supports a service in the AMF or the LADN information which is commonly applied to the PLMN.

In addition, in the case that version information of the LADN information is included in the registration request, based on the version information of the LADN information, the registration accept may include only the LADN information of which version is updated in comparison with the version information of the LADN information.

By performing PDU session establishment procedure, the UE establishes a PDU session for the LADN service (step, S804).

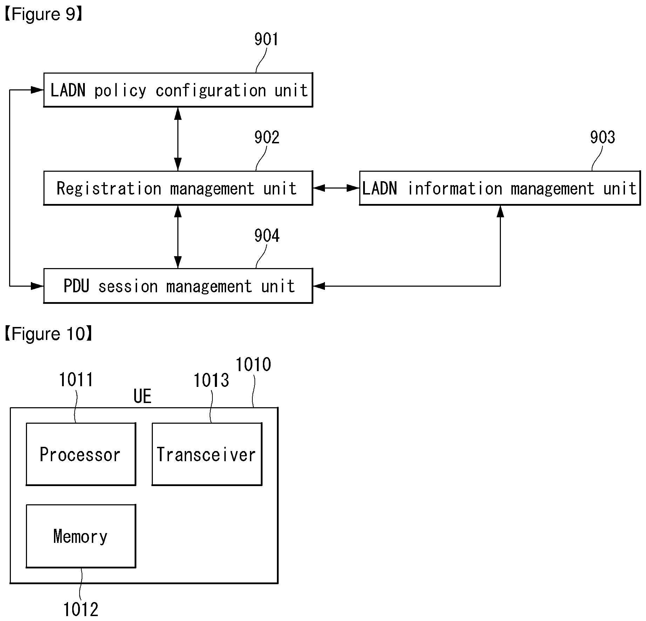

FIG. 9 illustrates a block diagram of a User Equipment according to an embodiment of the present invention.

Referring to FIG. 9, a User Equipment (UE) may include an LADN policy configuration unit 901, a registration management unit 902, an LADN information management unit 903 and a PDU session management unit 904.

The LADN policy configuration unit 901 configures a policy for an LADN discovery.

At this time, the policy for an LADN discovery may be preconfigured to the UE. Alternatively, the policy for an LADN discovery may be configured by receiving the policy for an LADN discovery which is generated by a PCF to an AMF.

In addition, the policy for an LADN discovery may be independently decided (generated) for each UE.

The registration management unit 902 transmits a registration request to the AMF. At this time, the registration request includes information for informing a request of LADN information for an LADN service.

In addition, the registration request may further include a separator for separating a request of only the LADN information that supports a service in the AMF or a request of the LADN information which is commonly applied to a Public Land Mobile Network (PLMN) and/or version information of the LADN information which is previously received.

Furthermore, as described above, in the case that the policy for an LADN discovery is configured by the LADN policy configuration unit 901, when the UE decides a discovery of the LADN information based on the policy for an LADN discovery configured by the LADN policy configuration unit 901, the registration management unit 902 may transmit the registration request to the AMF. For example, when a validity condition included in the policy for an LADN discovery configured by the LADN policy configuration unit 901 or detects that the UE enters an LADN service area (on the time when the LADN service is provided), the registration management unit 902 may decide a discovery of the LADN information.

In addition, the registration management unit 902 receives a registration accept for informing that the registration request is accepted from the AMF. The registration accept includes the LADN information.

At this time, in the case that the separator is included in the registration request, the registration accept may include only the LADN information that supports a service in the AMF or the LADN information which is commonly applied in the PLMN.

In addition, in the case that the registration request includes version information of the LADN information, the registration accept may include only the LADN information of which version is updated in comparison with the version information of the LADN information.

The LADN information management unit 903 manages the LADN information which is obtained through the registration management unit 902.

Later, the PDU session management unit 904 performs a PDU session establishment procedure.

At this time, the PDU session management unit 904 may establish a PDU session for the LADN service by being interlinked with the LADN information management unit 903.

FIG. 10 illustrates a block diagram of a User Equipment according to an embodiment of the present invention.

Referring to FIG. 10, a User Equipment (UE) 1010 includes a processor 1011, a memory 1012 and a transceiver (or a radio frequency (RF) unit) 1013.

The processor 1011 implements the functions, processes and/or methods proposed in FIGS. 1 to 8 above. Particularly, each of the elements of the UE exemplified in FIG. 9 above may be included in the processor 1011. The layers of wired or wireless interface protocol may be implemented by the processor 1011. The memory 1012 is connected to the processor 1011, and stores various types of information for driving the processor 1011. The transceiver 1013 is connected to the processor 1011, and transmits and/or receives radio signals.

The memory 1012 may be located interior or exterior of the processor 1011, and may be connected to the processor 1011 with well known means.

Particularly, according to the present invention, the processor 1011 may configure a policy for an LADN discovery.

At this time, the policy for an LADN discovery may be preconfigured in the memory 1012. Alternatively, the processor 1011 may receive a policy for an LADN discovery generated by a PCF from an AMF through the transceiver 1013.

In addition, the policy for an LADN discovery may be independently decided (generated) for each UE.

In addition, the processor 1011 transmits a registration request to the AMF through the transceiver 1013. The registration request includes information for informing a request of LADN information for an LADN service.

In addition, the registration request may further include a separator for separating a request of only the LADN information that supports a service in the AMF or a request of the LADN information which is commonly applied to a Public Land Mobile Network (PLMN) and/or version information of the LADN information which is previously received.

Furthermore, as described above, in the case that the policy for an LADN discovery is configured, when the processor 1011 decides a discovery of the LADN information based on the policy for an LADN discovery configured by the processor 1011, may transmit the registration request to the AMF through the transceiver 1013. For example, when a validity condition included in the policy for an LADN discovery configured by the LADN policy configuration unit 901 or detects that the UE enters an LADN service area (on the time when the LADN service is provided), the processor 1011 may decide a discovery of the LADN information.

In addition, the processor 1011 receives a registration accept for informing that the registration request is accepted from the AMF through the transceiver 1013. The registration accept includes the LADN information.

At this time, in the case that the separator is included in the registration request, the registration accept may include only the LADN information that supports a service in the AMF or the LADN information which is commonly applied in the PLMN.

In addition, in the case that the registration request includes version information of the LADN information, the registration accept may include only the LADN information of which version is updated in comparison with the version information of the LADN information.

In addition, the processor 1011 establishes a PDU session for the LADN service by performing a PDU session establishment procedure.

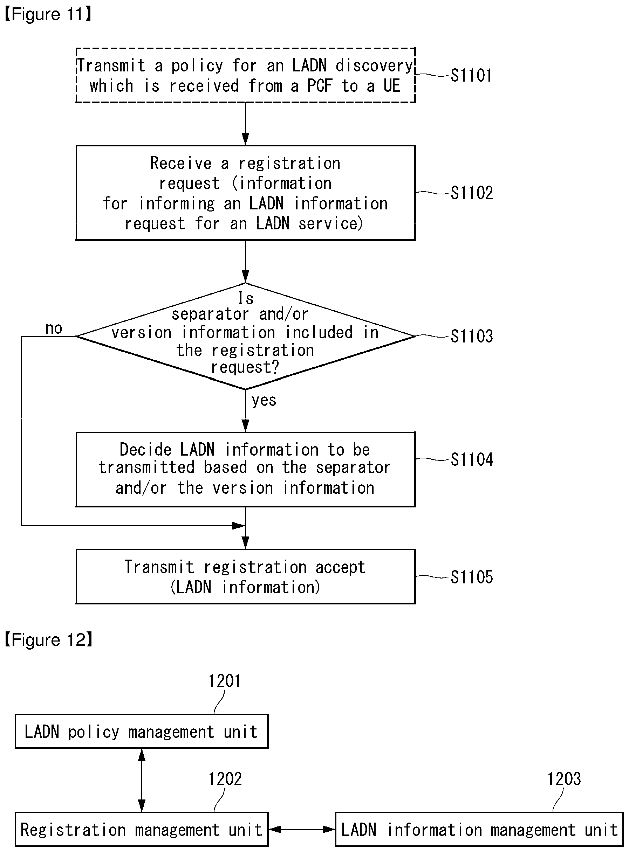

FIG. 11 illustrates a method for utilizing LADN according to an embodiment of the present invention.

Referring to FIG. 11, an AMF may transmit a policy for an LADN discovery which is received from a PCF to a UE (step, S1101).

At this time, the policy for an LADN discovery may be independently decided (generated) for each UE.

The AMF receives a registration request from the UE (step, S1102). The registration request includes information for informing an LADN information request for an LADN service.

The AMF checks whether the registration request further includes a separator for separating the request of only the LADN information that supports a service in the AMF or the request of the LADN information which is commonly applied to Public Land Mobile Network (PLMN) and/or version information of the LADN information which was received previously (step, S1103).

As a result of check in step S1103, in the case that the separator and/or the version information is not included in the registration request, after performing the registration procedure of the conventional art, the AMF transmits a registration accept for informing that the registration request is accepted to the UE (step, S1105). The registration accept includes the LADN information. In this case, for example, the LADN information may correspond to the LADN information that the AMF transmits to the UE according to the conventional art.

On the contrary, as a result of check in step S1103, in the case that the separator and/or the version information is included in the registration request, the AMF decides not only the registration procedure of the conventional art, but also the LADN information to be transmitted based on the separator and/or the version information additionally (step, S1104).

At this time, in the case that a separator is included the registration request, based on the separator, the AMF may include only the LADN information that supports a service in the AMF in the registration accept or include the LADN information which is commonly applied to the PLMN in the registration accept.

In addition, in the case that the version information of the LADN information is included in the registration request, based on the version information of the LADN information, the AMF may include only the LADN information of which version is updated in comparison with the version information of the LADN information in the registration accept.

In addition, in the case that both the separator and the version information of the LADN information are included in the registration request, the AMF operates as below. In the case that the separator indicates a request of only the LADN information that supports a service in the AMF, the AMF may include only the LADN information of which version is updated in comparison with the version information of the LADN information received among the LADN information that supports a service in the AMF in the registration accept. Alternatively, in the case that the separator indicates a request of the LADN information which is commonly applied to the PLMN, the AMF may include only the LADN information of which version is updated in comparison with the version information of the LADN information received among the LADN information which is commonly applied to the PLMN in the registration accept.

FIG. 12 illustrates a block diagram of a network node according to an embodiment of the present invention.

Referring to FIG. 12, a network node may include an LADN policy management unit 1201, a registration management unit 1202 and an LADN information management unit 1203.

The LADN policy management unit 1201 manages a policy for an LADN discovery received from a PCF, and transmits the policy for an LADN discovery to a UE through the registration management unit 1202.

At this time, the policy for an LADN discovery may be independently decided (generated) for each UE.

The registration management unit 1202 receives a registration request to the UE. The registration request includes information for informing a request of LADN information for an LADN service.

The LADN information management unit 1203 checks whether the registration request further includes a separator for separating the request of only the LADN information that supports a service in the AMF or the request of the LADN information which is commonly applied to Public Land Mobile Network (PLMN) and/or version information of the LADN information which was received previously.

In the case that the separator and/or the version information is not included in the registration request, the LADN information management unit 1203 may forward the LADN information that the AMF transmits to the UE according to the conventional art to the registration management unit 1202.

On the contrary, in the case that the separator and/or the version information is included in the registration request, the LADN information management unit 1203 decides the LADN information to be transmitted based on the separator and/or the version information.

In the case that a separator is included the registration request, based on the separator, the LADN information management unit 1203 may forward only the LADN information that supports a service in the AMF or forward the LADN information which is commonly applied to the PLMN to the registration management unit 1202.

In addition, in the case that the version information of the LADN information is included in the registration request above, based on the version information of the LADN information, the LADN information management unit 1203 may forward only the LADN information of which version is updated in comparison with the version information of the LADN information to the registration management unit 1202.

In addition, in the case that both the separator and the version information of the LADN information are included in the registration request, the LADN information management unit 1203 operates as below. In the case that the separator indicates a request of only the LADN information that supports a service in the AMF, the LADN information management unit 1203 may forward only the LADN information of which version is updated in comparison with the version information of the LADN information received among the LADN information that supports a service in the AMF to the registration management unit 1202. Alternatively, in the case that the separator indicates a request of the LADN information which is commonly applied to the PLMN, the LADN information management unit 1203 may forward only the LADN information of which version is updated in comparison with the version information of the LADN information received among the LADN information which is commonly applied to the PLMN to the registration management unit 1202.

The registration management unit 1202 transmits a registration accept for informing that the registration request including the LADN information forwarded from the LADN information management unit 1203 is accepted to the UE.

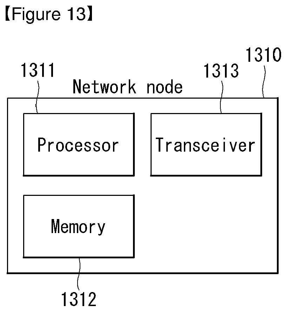

FIG. 13 illustrates a block diagram of a network node according to an embodiment of the present invention.

Referring to FIG. 13, a network node 1310 includes a processor 1311, a memory 1312 and a transceiver 1313.

The processor 1311 implements the functions, processes and/or methods proposed in FIGS. 1 to 8, FIG. 11 and FIG. 12 above. Particularly, each of the elements of the network node exemplified in FIG. 12 above may be included in the processor 1311. The layers of wired or wireless interface protocol may be implemented by the processor 1311. The memory 1312 is connected to the processor 1311, and stores various types of information for driving the processor 1311. The transceiver 1313 is connected to the processor 1311, and transmits and/or receives radio signals.

The memory 1312 may be located interior or exterior of the processor 1311, and may be connected to the processor 1311 with well known means.

An example of the network node 1310 may correspond to a network entity (e.g., AMF, SMF, (R)AN, UPF, PCF, etc.) illustrated in FIG. 1 above.

Particularly, in the case that the network node 1310 is the AMF, according to the present invention, the processor 1311 may transmit the policy for an LADN discovery received from a PCF to a UE through the transceiver 1313.

At this time, the policy for an LADN discovery may be independently decided (generated) for each UE.

In addition, in the case that the network node 1310 is the AMF, the processor 1311 receives a registration request to the UE through the transceiver 1313. The registration request includes information for informing an LADN information request for an LADN service.

The AMF checks whether the registration request further includes a separator for separating the request of only the LADN information that supports a service in the AMF or the request of the LADN information which is commonly applied to Public Land Mobile Network (PLMN) and/or version information of the LADN information which was received previously.

In addition, in the case that the network node 1310 is the AMF, the processor 1311 transmits a registration accept for informing that the registration request is accepted to the UE through the transceiver 1313.

In the case that the separator and/or the version information is not included in the registration request, the registration accept is transmitted with being included in the LADN information. In this case, for example, the LADN information may correspond to the LADN information that the AMF transmits to the UE according to the conventional art.

On the contrary, in the case that the separator and/or the version information is included in the registration request, the processor 1311 decides the LADN information to be transmitted based on the separator and/or the version information.

At this time, in the case that a separator is included the registration request, based on the separator, the processor 1311 may include only the LADN information that supports a service in the AMF in the registration accept or include the LADN information which is commonly applied to the PLMN in the registration accept.

In addition, in the case that the version information of the LADN information is included in the registration request, based on the version information of the LADN information, the processor 1311 may include only the LADN information of which version is updated in comparison with the version information of the LADN information in the registration accept.

In addition, in the case that both the separator and the version information of the LADN information are included in the registration request, the processor 1311 operates as below. In the case that the separator indicates a request of only the LADN information that supports a service in the AMF, the processor 1311 may include only the LADN information of which version is updated in comparison with the version information of the LADN information received among the LADN information that supports a service in the AMF in the registration accept. Alternatively, in the case that the separator indicates a request of the LADN information which is commonly applied to the PLMN, the processor 1311 may include only the LADN information of which version is updated in comparison with the version information of the LADN information received among the LADN information which is commonly applied to the PLMN in the registration accept.
[1] In the aforementioned embodiments, the elements and characteristics of the present invention have been combined in specific forms. Each of the elements or characteristics may be considered to be optional unless otherwise described explicitly. Each of the elements or characteristics may be implemented in such a way as to be not combined with other elements or characteristics. Furthermore, some of the elements and/or the characteristics may be combined to form an embodiment of the present invention. The order of the operations described in connection with the embodiments of the present invention may be changed. Some of the elements or characteristics of an embodiment may be included in another embodiment or may be replaced with corresponding elements or characteristics of another embodiment. It is evident that an embodiment may be configured by combining claims not having an explicit citation relation in the claims or may be included as a new claim by amendments after filing an application.
[2] The embodiment of the present invention may be implemented by various means, for example, hardware, firmware, software or a combination of them. In the case of implementations by hardware, an embodiment of the present invention may be implemented using one or more application-specific integrated circuits (ASICs), digital signal processors (DSPs), digital signal processing devices (DSPDs), programmable logic devices (PLDs), field programmable gate arrays (FPGAs), processors, controllers, microcontrollers and/or microprocessors.
[3] In the case of an implementation by firmware or software, an embodiment of the present invention may be implemented in the form of a module, procedure, or function for performing the aforementioned functions or operations. Software code may be stored in memory and driven by a processor. The memory may be located inside or outside the processor, and may exchange data with the processor through a variety of known means.

It is evident to those skilled in the art that the present invention may be materialized in other specific forms without departing from the essential characteristics of the present invention. Accordingly, the detailed description should not be construed as being limitative from all aspects, but should be construed as being illustrative. The scope of the present invention should be determined by reasonable analysis of the attached claims, and all changes within the equivalent range of the present invention are included in the scope of the present invention.

### [Industrial Applicability]

The present invention, applied to 3GPP 5G system, is primarily described as an example, but may be applied to various wireless communication systems in addition to the 3GPP 5G system.

## Claims

1. A method of establishing a protocol data unit (PDU) session for a local area data network (LADN) by a user equipment (UE) in a wireless communication system, the method comprising:
transmitting, by the UE and to an Access and mobility Management Function (AMF), a registration request message comprising LADN request information that is related to requesting LADN information from the AMF;
receiving, by the UE and from the AMF, a registration accept message comprising the LADN information, wherein the LADN information relates to at least one LADN that is available to the UE; and
transmitting, by the UE and to the AMF, a PDU session establishment request for the at least one LADN, based on the LADN information received from the AMF.

2. The method of claim 1, wherein the LADN information refers to a list of one or more LADNs available to the UE in a registration area, and
wherein each entry in the list of one or more LADNs comprises information regarding a service area for a LADN and at least one data network name (DNN) for the LADN.

3. The method of claim 2, wherein the LADN request information in the registration request message specifies at least one LADN that supports an LADN service for the UE in the AMF, and
wherein based on the LADN request information specifying at least one LADN that supports the LADN service for the UE in the AMF:
the list of the one or more LADNs of the LADN information received from the AMF is a list of the at least one LADN that supports the LADN service for the UE in the AMF.

4. The method of claim 1, further comprising:
initiating a procedure for requesting PDU session establishment based on preset LADN connection permission information.

5. The method of claim 1, further comprising:
determining subscription information to a wildcard DNN that permits the UE to receive an LADN service used in the LADN.

6. The method of claim 1, wherein transmitting the registration request message comprises:
transmitting the registration request message based on the UE being in a CM_CONNECTED state.

7. The method of claim 6, wherein transmitting the registration request message comprises:
transmitting the registration request message based on the UE changing an RRC state and based on information indicating whether an RRC state report should be performed.

8. A user equipment (UE) configured to establish a protocol data unit (PDU) session for a local area data network (LADN) in a wireless communication system, the UE comprising:
at least one radio frequency (RF) module;
at least one processor; and
at least one computer memory operably connectable to the at least one processor and storing instructions that, when executed, cause the at least one processor to perform operations comprising:
transmitting, by the UE and to an Access and mobility Management Function (AMF) through the at least one RF module, a registration request message comprising LADN request information that is related to requesting LADN information from the AMF;
receiving, by the UE and from the AMF through the at least one RF module, a registration accept message comprising the LADN information, wherein the LADN information relates to at least one LADN that is available to the UE; and
transmitting, by the UE and to the AMF through the at least one RF module, a PDU session establishment request for the at least one LADN, based on the LADN information received from the AMF.

9. The UE of claim 8, wherein the LADN information refers to a list of one or more LADNs available to the UE in a registration area, and
wherein each entry in the list of one or more LADNs comprises information regarding a service area for a LADN and at least one data network name (DNN) for the LADN.

10. The UE of claim 9, wherein the LADN request information in the registration request message specifies at least one LADN that supports an LADN service for the UE in the AMF, and
wherein based on the LADN request information specifying at least one LADN that supports the LADN service for the UE in the AMF:
the list of the one or more LADNs of the LADN information received from the AMF is a list of the at least one LADN that supports the LADN service for the UE in the AMF.

11. The UE of claim 8, wherein the operations further comprise:
initiating a procedure for requesting PDU session establishment based on preset LADN connection permission information.

12. The UE of claim 8, wherein the operations further comprise:
determining subscription information to a wildcard DNN that permits the UE to receive an LADN service used in the LADN.

13. The UE of claim 8, wherein transmitting the registration request message comprises:
transmitting the registration request message based on the UE being in a CM_CONNECTED state.

14. The UE of claim 13, wherein transmitting the registration request message comprises:
transmitting the registration request message based on the UE changing an RRC state and based on information indicating whether an RRC state report should be performed.

15. A method performed by an Access and mobility Management Function (AMF) to establish a protocol data unit (PDU) session for a local area data network (LADN) for a user equipment (UE) in a wireless communication system, the method comprising:
receiving, from the UE and by the AMF, a registration request message comprising LADN request information that is related to requesting LADN information from the AMF;
transmitting, to the UE and by the AMF, a registration accept message comprising the LADN information, wherein the LADN information relates to at least one LADN that is available to the UE; and
receiving, from the UE and by the AMF, a PDU session establishment request for the at least one LADN, based on the LADN information received from the AMF.

16. The method of claim 15, wherein the LADN information refers to a list of one or more LADNs available to the UE in a registration area, and
wherein each entry in the list of one or more LADNs comprises information regarding a service area for a LADN and at least one data network name (DNN) for the LADN.

17. The method of claim 16, wherein the LADN request information in the registration request message specifies at least one LADN that supports an LADN service for the UE in the AMF, and
wherein based on the LADN request information specifying at least one LADN that supports the LADN service for the UE in the AMF:
the list of the one or more LADNs of the LADN information transmitted to the UE is a list of the at least one LADN that supports the LADN service for the UE in the AMF.

18. A network device comprising an Access and mobility Management Function (AMF) configured to establish a protocol data unit (PDU) session for a local area data network (LADN) for a user equipment (UE) in a wireless communication system, the network device comprising:
at least one radio frequency (RF) module;
at least one processor; and
at least one computer memory operably connectable to the at least one processor and storing instructions that, when executed, cause the at least one processor to perform operations comprising:
receiving, from the UE and by the AMF, a registration request message comprising LADN request information that is related to requesting LADN information from the AMF;
transmitting, to the UE and by the AMF, a registration accept message comprising the LADN information, wherein the LADN information relates to at least one LADN that is available to the UE; and
receiving, from the UE and by the AMF, a PDU session establishment request for the at least one LADN, based on the LADN information received from the AMF.

19. The network device of claim 18, wherein the LADN information refers to a list of one or more LADNs available to the UE in a registration area, and
wherein each entry in the list of one or more LADNs comprises information regarding a service area for a LADN and at least one data network name (DNN) for the LADN.

20. The network device of claim 19, wherein the LADN request information in the registration request message specifies at least one LADN that supports an LADN service for the UE in the AMF, and
wherein based on the LADN request information specifying at least one LADN that supports the LADN service for the UE in the AMF:
the list of the one or more LADNs of the LADN information transmitted to the UE is a list of the at least one LADN that supports the LADN service for the UE in the AMF.
